# EUROPEAN PATENT APPLICATION

(11) **EP 3 578 866 A1**
(43) Date of publication of application: **11.12.2019**
(21) Application number: 18748642.8
(22) Date of filing: 02.02.2018
(51) Int. Cl.: F16L 59/10, F04B 15/08, F04B 43/08, F04B 53/08

(54) **HEAT-INSULATING STRUCTURE AND LIQUID SUPPLY SYSTEM**

(30) Priority: 03.02.2017 JP 2017019049
(71) Applicant: Eagle Industry Co., Ltd., Minato-ku Tokyo 105-8587 (JP)
(72) Inventor: MORI, Koichi, Tokyo 105-8587 (JP); FURUTA, Kiyotaka, Tokyo 105-8587 (JP); KITO, Masato, Tokyo 105-8587 (JP)
(74) Representative: TBK
(86) International application number: PCT/JP2018/003643
(87) International publication number: WO 2018/143425

(57) **Abstract**

There is provided a heat insulation structure and a liquid supply system that can prevent breakage of a heat insulation member while providing satisfactory heat insulation. The heat insulation structure includes heat insulation members 520 provided between two components and having heat conductivity lower than the two components and a slidable member 530 slidable on the heat insulation member 520. At least two of the heat insulation members 520 are arranged along the direction of compression by the two components, and at least one of the slidable member 530 is disposed between the heat insulation members which are adjacent to each other. The heat insulation members 520 and the slidable member 530 are allowed to be displaced in directions perpendicular to the direction of compression.

## Description

### [Technical Field]

The present invention relates to a heat insulation structure provided in a joint portion between two components that are fixed to each other and a liquid supply system including such a heat insulation structure.

### [Background Art]

It is known in prior art to use a liquid supply system having a pump chamber using a bellows to cause a cryogenic liquid such as liquid nitrogen or liquid helium to circulate in a circulation fluid passage. It is necessary for such a liquid supply system to keep the interior of the system in a ultra-low temperature state. Hence, if the system includes two structural components fixed to each other one of which is exposed to the outside air and apt to transfer heat to the interior of the system, it is necessary to provide a heat insulation structure in the joint portion of these two components.

Moreover, in the case of a large-size liquid supply system, it is necessary that structural components of the system have high strength. To enhance the strength, it is desirable that the structural components be made of a metal material, such as a stainless steel or a copper alloy. However, such metal materials have high heat conductivities and are not suitable for use as materials of the components of a heat insulation structure. There are high strength, low heat-conductive ceramic materials, such as zirconia. However, while such ceramic materials have high resistance against compressive load, their tensile strength is low. Moreover, such ceramic materials are apt to be broken when a shearing force acts on them.

### [Citation List]

### [Patent Literature]

[PTL 1]
   Japanese Patent Application Laid-Open No. 2007-177667
[PTL 2]
   Japanese Patent Application Laid-Open No. 2009-2252

### [Summary of Invention]

### [Technical Problem]

An object of the present invention is to provide a heat insulation structure and a liquid supply system that can prevent breakage of a heat insulation member while providing satisfactory heat insulation.

### [Solution to Problem]

To achieve the above object, the following features are adopted.

An aspect of the present invention is a heat insulation structure provided in a joint portion between two components fixed to each other and subject to a compressive force, comprising;
heat insulation members disposed between the two components and made of a material having heat conductivity lower than the two component; and
a slidable member slidable on the heat insulation members,
wherein at least two of the heat insulation members are arranged along the direction of compression and at least one of the slidable member is disposed between the heat insulation members which are adjacent to each other, the heat insulation members and the slidable member being allowed to be displaced in directions perpendicular to the direction of compression.

The heat insulation members are allowed to be displaced in directions perpendicular to the direction of compression by the two components, thus the heat insulation members are merely caused to slide on the slidable member even when a force acts in the perpendicular directions. Therefore, a force in a shearing direction scarcely acts on the heat insulation members. In consequence, the heat insulation members are prevented from breaking.

The heat insulation structure may include a restriction member made of a resin that restricts the amount of movement of the heat insulation members and the slidable member in the perpendicular directions.

This prevents the heat insulation members and the slidable member from being displaced greatly.

The restriction member may be fixed on one of the two components, and the insulation member that is in contact with the other component among the two components on which the restriction member is not fixed may have a recessed portion provided on its end on the side facing the other component on which the restriction member is not fixed, the recessed portion engaging with a projecting portion provided on the restriction member.

This feature prevents a compressive force by the two components from being exerted on the restriction member, or the compressive force exerted on the restriction member can be reduced.

The restriction member may be fixed on one of the two components, an elastic member having strength higher than the restriction member may be disposed between the other component among the two components on which the restriction member is not fixed and the heat insulation member, and the elastic member may have a recessed portion provided on its end on the side facing the other component on which the restriction member is not fixed, the recessed portion engaging with a projecting portion provided on the restriction member.

This feature prevents a compressive force by the two components from being exerted on the restriction member, or the compressive force exerted on the restriction member can be reduced.

A first component among the two components may be disposed on both sides of a second component among the two components with respect to the direction of compression, and the heat insulation structure may be provided between the first component and the second component on each side of the second component with respect to the direction of compression.

Thus, the heat insulation members are constrained when the two components exert a compressive force on them but not constrained when a tensile force acts on them. Therefore, a tensile force does not act on the heat insulation members.

Another aspect of the present invention is a liquid supply system comprises:
a container provided with a pump chamber inside it;
a shaft member that moves vertically upward and downward in the container; and
a bellows provided coaxially with the shaft member that expands and contracts with upward and downward motion of the shaft member,
wherein the shaft member includes a main shaft portion and a supporting member that supports the bellows, and the above-described heat insulation structure is provided between the main shaft portion and the supporting member.

### [Advantageous Effects of Invention]

The heat insulation structure according to the present invention can prevent breakage of a heat insulation member while providing satisfactory heat insulation.

### [Brief Description of Drawings]

[Fig. 1]

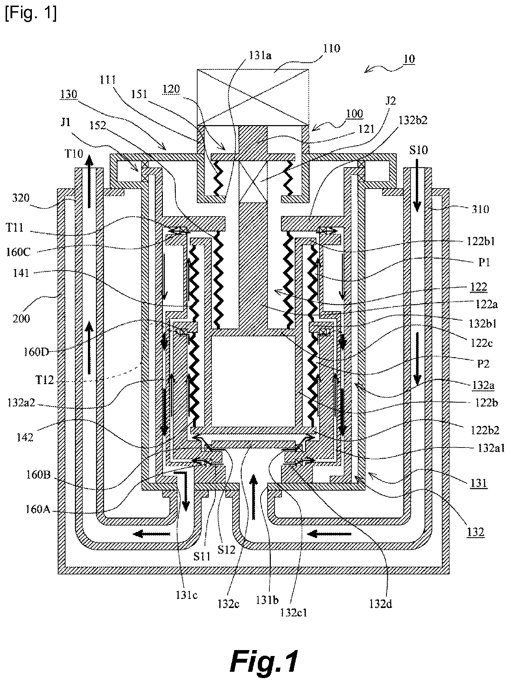

   Fig. 1 is a schematic diagram illustrating a liquid supply system in an embodiment.
[Fig. 2]

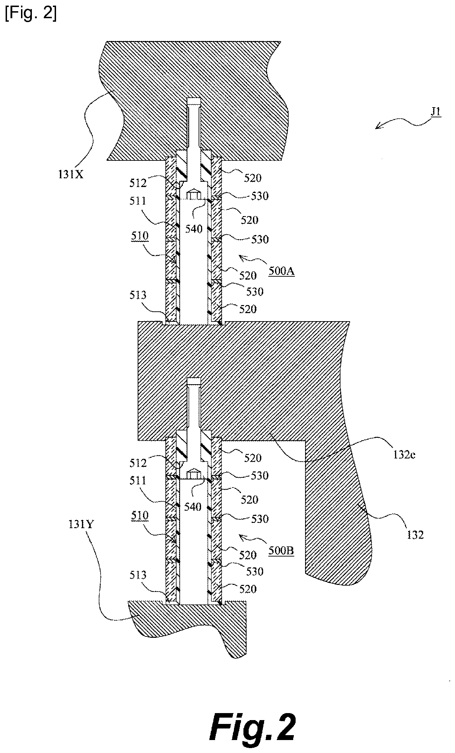

   Fig. 2 is a schematic cross sectional view of an insulation structure provided in a joint portion between an outer casing and an inner casing in the embodiment.
[Fig. 3]

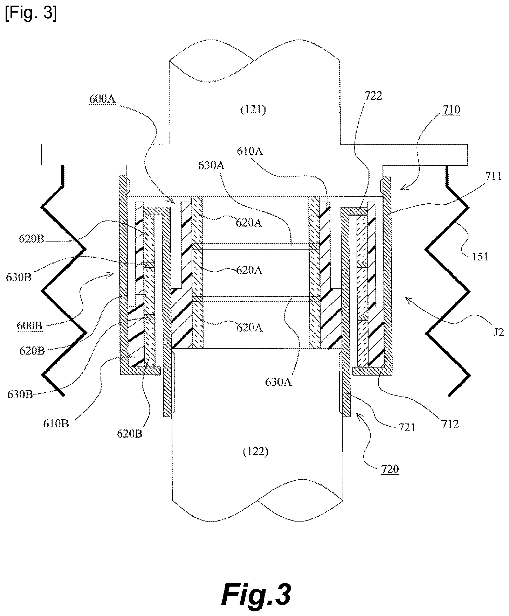

   Fig. 3 is a schematic cross sectional view of an insulation structure provided in a joint portion between a main shaft portion and a supporting member in the embodiment.
[Fig. 4]

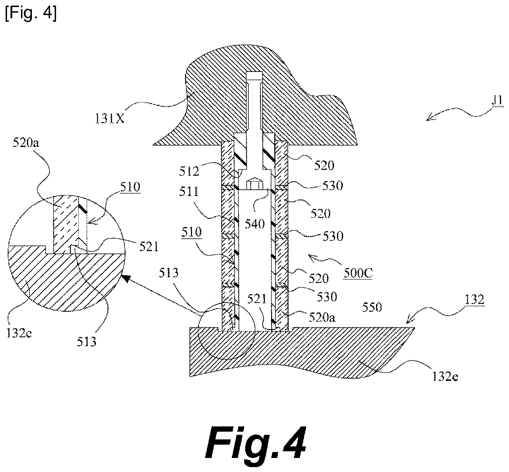

   Fig. 4 is a schematic cross sectional view of a first modification of the insulation structure provided in the joint portion between the outer casing and the inner casing in the embodiment.
[Fig. 5]

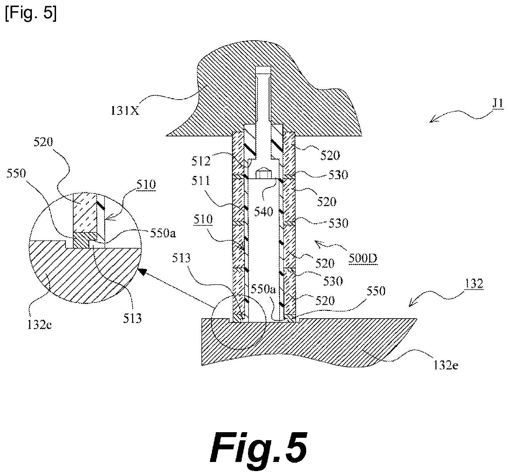

   Fig. 5 is a schematic cross sectional view of a second modification of the insulation structure provided in the joint portion between the outer casing and the inner casing in the embodiment.

### [Description of Embodiments]

In the following, a mode for carrying out the present invention will be described specifically by way of example on the basis of an embodiment with reference to the drawings. The dimensions, materials, shapes, relative arrangements, and other features of the components that will be described in connection with the embodiments are not intended to limit the technical scope of the present invention only to them, unless particularly stated.

### Embodiment

A liquid supply system in an embodiment will be described with reference to Figs. 1 to 3. The liquid supply system is suitably used for the purpose of, for example, maintaining a superconducting device in a ultra-low temperature state. Superconducting devices require perpetual cooling of components such as superconducting coils. Thus, a cooled device including a superconducting coil and other components is perpetually cooled by continuous supply of a cryogenic liquid (such as liquid nitrogen or liquid helium) to the cooled device. Specifically, a circulating fluid passage passing through the cooled device is provided, and the liquid supply system is connected to the circulating fluid passage to cause the cryogenic liquid to circulate, thereby enabling perpetual cooling of the cooled device.

### <Overall Configuration of the Liquid Supply System>

Fig. 1 is a schematic diagram illustrating the overall configuration of the liquid supply system, where the overall configuration of the liquid supply system is illustrated in a cross section. Fig. 1 illustrates the overall configuration in a cross section in a plane containing the center axis.

The liquid supply system 10 includes a main unit of the liquid supply system 100 (which will be referred to as the "main system unit 100" hereinafter), a vacuum container 200 in which the main system unit 100 is housed, and pipes (including an inlet pipe 310 and an outlet pipe 320). The main system unit 100 and the vacuum container 200 are fixed to each other.

The inlet pipe 310 and the outlet pipe 320 both extend into the interior of the vacuum container 200 from outside the vacuum container 200 and are connected to the main system unit 100. The interior of the vacuum container 200 is a hermetically sealed space. The interior space of the vacuum container 200 outside the main system unit 100, the inlet pipe 310, and the outlet pipe 320 is kept in a vacuum state. Thus, this space provides heat insulation. The liquid supply system 10 is normally installed on a horizontal surface. In the installed state, the upward direction of the liquid supply system 10 in Fig. 1 is the vertically upward direction and the downward direction in Fig. 1 is the vertically downward direction.

The main system unit 100 includes a linear actuator 110 serving as a driving source, a shaft member 120 that is moved in vertically upward and downward directions by the linear actuator 110, and a container 130. The linear actuator 110 is fixed on something suitable, which may be the container 130 or something that is not shown in the drawings. In this embodiment, the linear actuator 110 is fixed on the container 130 by an actuator supporter 111. The container 130 includes an outer casing 131 and an inner casing 132 provided inside the outer casing 131. The outer casing 131 and the inner casing 132 are connected by a joint portion J1. The shaft member 120 extends from outside the container 130 into the inside through an opening 131a provided in the ceiling portion of the outer casing 131. The outer casing 131 has an inlet 131b and an outlet 131c for liquid (cryogenic liquid) in its bottom portion. The aforementioned inlet pipe 310 is connected to the inlet 131b and the outlet pipe 320 is connected to the outlet 131c.

Inside the outer casing 131 are provided a plurality of structural components besides the inner casing 132. These structural components and the inner casing 132 compart the interior space into plurality of spaces, which constitute a plurality of pump chambers and passages for liquid. In the following, the structure inside the outer casing 131 will be described in further detail.

The shaft member 120 has a main shaft portion 121 and a supporting member 122 on which a plurality of bellows (including a first bellows 141, a second bellows 142, and a fourth bellows 152) are supported. The main shaft portion 121 and the supporting member 122 are connected by a joint portion J2. The supporting member 122 includes a center shaft portion 122a, a cylindrical portion 122b that surrounds the outer circumference of the center shaft portion 122a, and a connecting portion 122c that connects the center shaft portion 122a and the cylindrical portion 122b. The cylindrical portion 122b is provided with an upper outward flange 122b1 at its upper end and a lower outward flange 122b2 at its lower end.

The inner casing 132 has a body portion 132a having a substantially cylindrical shape, a first inward flange 132b1 provided near the center of the body portion 132a, and a bottom plate 132c. The inner casing 132 is integral with the outer casing 131, and thus the inner casing 132 is kept stationary relative to the outer casing 131 even while the shaft member 120 moves upward and downward.

Inside the body portion 132a of the inner casing 132, there are a plurality of first fluid passages 132a1 that extend in the axial direction below the first inward flange 132b1 and are spaced apart from one another along the circumferential direction. Inside the body portion 132a, there also is a second fluid passage 132a2, which is an axially extending cylindrical space provided radially outside the region in which the first fluid passages 132a1 are provided. The bottom portion of the inner casing 132 is provided with a fluid passage 132d that extends circumferentially and radially outwardly to join to the first fluid passages 132a1. Furthermore, the bottom plate 132c of the inner casing 132 is provided with a fluid passage 132c1 that extends circumferentially and radially outwardly. These fluid passages 132d and 132c1 extend uniformly along the circumferential direction to allow liquid to flow radially outwardly in all directions, namely 360 degrees about the center axis.

Inside the container 130, there are provided the first bellows 141 and the second bellows 142, which expand and contract with the up and down motion of the shaft member 120. The first bellows 141 and the second bellows 142 are arranged one above the other along the vertical direction. The upper end of the first bellows 141 is fixedly attached to the upper outward flange 122b1 of the cylindrical portion 122b of the supporting member 122 and the lower end of the first bellows 141 is fixedly attached to the first inward flange 132b1 of the inner casing 132. The upper end of the second bellows 142 is fixedly attached to the first inward flange 132b1 of the inner casing 132 and the lower end of the second bellows 142 is fixedly attached to the lower outward flange 122b2 of the cylindrical portion 122b of the supporting member 122. The space surrounding the outer circumference of the first bellows 141 forms a first pump chamber P1 and the space surrounding the outer circumference of the second bellows 142 forms a second pump chamber P2.

Inside the container 130, there also are provided a third bellows 151 and the fourth bellows 152, which expand and contract with the up and down motion of the shaft member 120. The upper end of the third bellows 151 is fixedly attached to the main shaft portion 121 of the shaft member 120 and the lower end of the third bellows 151 is fixedly attached to the ceiling portion of the outer casing 131. Thus, the opening 131a of the outer casing 131 is closed. The upper end of the fourth bellows 152 is fixedly attached to a second inward flange 132b2 provided on the inner casing 132 and the lower end of the fourth bellows 152 is fixedly attached to the connecting portion 122c of the supporting member 122. Thus, the space around the center shaft portion 122a of the supporting member 122 and the fluid passage passing through the first pump chamber P1 is separated.

There are four check valves 160 including a first check valve 160A, a second check valve 160B, a third check valve 160C, and a fourth check valve 160D, which are provided at different locations inside the container 130. Each of these check valves 160 is an annular component provided coaxially with the shaft member 120. Each of the check valves 160 is configured to allow flow of liquid in radial directions from inside to outside and to block flow of liquid in radial directions from outside to inside.

The first check valve 160A and the third check valve 160C are provided in the fluid passage passing through the first pump chamber P1. The first check valve 160A and the third check valve 160C function to block backflow of liquid pumped by the pumping effect of the first pump chamber P1. Specifically, the first check valve 160A is provided on the upstream side of the first pump chamber P1 and the third check valve 160C is provided on the downstream side of the first pump chamber P1. More specifically, the first check valve 160A is provided in the fluid passage 132d provided in the bottom portion of the inner casing 132. The third check valve 160C is provided in the fluid passage formed in the vicinity of the second inward flange 132b2 provided on the inner casing 132.

The second check valve 160B and the fourth check valve 160D are provided in the fluid passage passing through the second pump chamber P2. The second check valve 160B and the fourth check valve 160D function to block backflow of liquid pumped by the pumping effect of the second pump chamber P2. Specifically, the second check valve 160B is provided on the upstream side of the second pump chamber P2 and the fourth check valve 160D is provided on the downstream side of the second pump chamber P2. More specifically, the second check valve 160B is provided in the fluid passage 132c1 provided in the bottom plate 132c of the inner casing 132. The fourth check valve 160D is provided in the fluid passage formed in the vicinity of the first inward flange 132b1 of the inner casing 132.

### <Description of the Overall Operation of the Liquid Supply System>

The overall operation of the liquid supply system will be described. When the shaft member 120 is lowered by the linear actuator 110, the first bellows 141 contracts and the second bellows 142 expands. Consequently, the fluid pressure in the first pump chamber P1 decreases. Then, the first check valve 160A is opened and the third check valve 160C is closed. In consequence, liquid supplied from outside the liquid supply system 10 through the inlet pipe 310 (indicated by arrow S10) is taken into the interior of the container 130 through the inlet 131b and passes through the first check valve 160A (indicated by arrow S11). Then, the liquid having passed through the first check valve 160A is pumped into the first pump chamber P1 through the first fluid passage 132a1 in the body portion 132a of the inner casing 132. On the other hand, the fluid pressure in the second pump chamber P2 increases. Then, the second check valve 160B is closed and the fourth check valve 160D is opened. In consequence, the liquid in the second pump chamber P2 is pumped into the second fluid passage 132a2 provided in the body portion 132a through the fourth check valve 160D (indicated by arrow T12). Then, the fluid passes through the outlet 131c and is brought to the outside of the liquid supply system 10 through the outlet pipe 320 (indicated by arrow T10).

When the shaft member 120 is raised by the linear actuator 110, the first bellows 141 expands and the second bellows 142 contracts. Consequently, the fluid pressure in the first pump chamber P1 increases. Then, the first check valve 160A is closed and the third check valve 160C is opened. In consequence, the liquid in the first pump chamber P1 is pumped into the second fluid passage 132a2 provided in the body portion 132a through the third check valve 160C (indicated by arrow T11). Then, the liquid passes through the outlet 131c and is brought to the outside of the liquid supply system 10 through the outlet pipe 320 (indicated by arrow T10). On the other hand, the fluid pressure in the second pump chamber P2 decreases. Then, the second check valve 160B is opened and the fourth check valve 160D is closed. In consequence, liquid supplied from outside the liquid supply system 10 through the inlet pipe 310 (indicated by arrow S10) is taken into the interior of the container 130 through the inlet 131b and passes through the second check valve 160B (indicated by arrow S12). Then, the liquid having passed through the second check valve 160B is pumped into the second pump chamber P2.

As above, the liquid supply system 10 can cause liquid to flow from the inlet pipe 310 to the outlet pipe 320 both when the shaft member 120 moves downward and when the shaft member 120 moves upward. Hence, the phenomenon called pulsation can be reduced.

It is necessary that the interior of the main system unit 100 of the liquid supply system 10 having the above structure be kept in a ultra-low temperature state. In the case of the liquid supply system 10, heat is apt to be transferred through a path from the outer casing 131 to an inner casing 132 and a path from the atmosphere side of the shaft member 120 to the interior of the container 130. To avoid such heat transfer, the liquid supply system 10 is provided with a heat insulation structure in the joint portion J1 between the outer casing 131 and the inner casing 132 and a heat insulation structure in the joint portion J2 between the main shaft portion 121 and the supporting member 122 of the shaft member 120. In the following, these heat insulation structures will be described.

### <Heat Insulation Structure in Joint Portion J1>

The outer casing 131 and the inner casing 132 are respectively fixed by a fixing structure (not illustrated) provided in a portion that does not need to have a heat insulation structure. The joint portion J1 of the outer casing 131 and the inner casing 132 is subject to a compressive force by the outer casing 131 and the inner casing 132 The joint portion J1 is configured to provide a support against the compressive force. As described above, the joint portion J1 has the function of heat insulation to prevent outside heat from being transferred to the interior of the main system unit 100. In the following, the structure of the joint portion J1 will be described with reference to Fig. 2.

The outer circumference of the inner casing 132 is provided with an outward flange 132e. The outer casing 131 is provided with a pair of plate portions 131X, 131Y near its ceiling, which sandwiches the outward flange 132e. Heat insulation structures 500A and 500B are provided respectively between the outward flange 132e and one plate portion 131X (which will be referred to as the "first plate portion 131X" hereinafter) and between the outward flange 132e and the other plate portion 131Y (which will be referred to as the "second plate portion 131Y" hereinafter). There are a plurality of heat insulation structures 500A and a plurality of heat insulation structures 500B which are spaced from one another along the circumferential direction about the center axis of the shaft member 120. Though not shown in the drawings, a sealing member that seals the gap between the outer casing 131 and the inner casing 132 is provided.

The heat insulation structures 500A and 500B have the same structure, and thus only the heat insulation structure 500A will be described. Each heat insulation structure 500A includes a restriction member 510 having a substantially cylindrical shape, a plurality of heat insulation members 520 each having a cylindrical shape, and a plurality of slidable members 530 each having a cylindrical shape. The restriction member 510 is made of a resin material having high heat-insulating properties and has a cylindrical outer circumferential surface 511. The restriction member 510 is fixed to the first plate portion 131X of the outer casing 131 by a bolt 540. The inner circumference of the restriction member 510 has a stepped surface 512, which the head of the bolt 540 abuts. The lower end of the restriction member 520 only abuts the outward flange 132e of the inner casing 132 and is not fixed to it. The restriction member 510 in the heat insulation structure 500B is fixed to the outward flange 132e of the inner casing 132. The lower end of the restriction member 510 abuts the second plate portion 131Y of the outer casing 131 and is not fixed to it.

The heat insulation member 520 is made of a brittle material having high heat-insulating properties and pressure resistance (e.g. a ceramic such as zirconia). The heat insulation member 520 is made of a material having heat conductivity lower than at least the material of the outer casing 131 and the inner casing 132. The heat insulation structure 500A includes four heat insulation members 520. A heat insulation structure in another embodiment may include at least two heat insulation members and the number thereof is not limited particularly. The slidable member 530 is made of a material having low emissivity and allowing the heat insulation member 520 to slide on it. Examples of such materials include a stainless steel and aluminum. The heat insulation structure 500A includes three slidable members 530. A heat insulation structure in another embodiment may include at least one slidable member and the number thereof is not limited particularly.

The heat insulation members 520 and the slidable members 530 are arranged alternately along the direction of compression by the outer casing 131 and the inner casing 132 (more specifically, the first plate portion 131X and the outward flange 132e). The restriction member 510 is inserted through the heat insulation members 520 and the slidable members 530. A small gap is left between the outer circumferential surface 511 of the restriction member 510 and the inner circumferential surfaces of the heat insulation members 520 and between the outer circumferential surface 511 of the restriction member 510 and the inner circumferential surfaces of the slidable members 530. The heat insulation members 520 and the slidable members 530 are not adhered to anything.

Arranged as above, the heat insulation members 520 are constrained when the outer casing 131 and the inner casing 132 exert a compressive force on them but not constrained when a tensile force acts on them. The slidable members 530 are constrained when the outer casing 131 and the inner casing 132 exert a compressive force on them but not constrained when a tensile force acts on them. Each slidable member 530 is disposed between adjacent heat insulation members 520 and slidable on the heat insulation members 520. The heat insulation members 520 and the slidable members 530 are allowed to be displaced in directions perpendicular to the direction of compression by the outer casing 131 and the inner casing 132. As described above, the restriction member 510 restricts the amount of movement of the heat insulation members 520 and the slidable members 530 in the aforementioned perpendicular directions.

As described above, while a compressive force acts on the heat insulation members 520, a tensile force does not act on them. When cryogenic liquid circulates in the interior of the main system unit 100, the temperature difference between the outer casing 131 and the inner casing 132 becomes large, and then the inner casing 132 contracts relative to the outer casing 131. Consequently, the outward flange 132e moves rightward in Fig. 2 relative to the outer casing 131. In consequence, the lower portion of the heat insulation structure 500A is pulled toward the right side in Fig. 2 and the upper portion of the heat insulation structure 500B is pulled toward the right side in Fig. 2. Thus, a force that inclines the heat insulation structures 500A, 500B acts on each of them. Consequently, the restriction member 510 made of a resin deforms to incline. Due to the presence of the slidable members 530 that are slidable between the heat insulation members 520, the four heat insulation members 520 in the heat insulation structure 500A are displaced rightward in Fig. 2 with the amount of displacement increasing from above to below. The four heat insulation members 520 in the heat insulation structure 500B are displaced rightward in Fig. 2 with the amount of displacement increasing from below to above.

### <Heat Insulation Structure in Joint Portion J2>

The joint portion J2 is provided in the portion by which the main shaft portion 121 and the supporting member 122 of the shaft member 120 are fixedly joined. In the following, we will describe the structure of fixedly joining the main shaft portion 121 and the supporting member 122 and the structure of the joint portion J2 having the function of heat insulation with reference to Fig. 3.

To the main shaft portion 121 is fixedly attached by screwing a first annular member 710, which includes a cylindrical portion 711 having a female screw provided on its inner circumference and an inward flange 712 provided at the lower end of the cylindrical portion 711. To the supporting member 122 is fixedly attached by screwing a second annular member 720, which includes a cylindrical portion 721 having a female screw provided on its inner circumference and an outward flange 722 provided at the upper end of the cylindrical portion 721. The first annular member 710 and the second annular member 720 are made of a metal or the like. Heat insulation structures are provided on both the inner and outer circumferential surfaces of the second annular member 720. For the sake of convenience of description, the heat insulation structure inside the second annular member 720 will be referred to as the first heat insulation structure 600A and the heat insulation structure outside the second annular member 720 will be referred to as the second heat insulation structure 600B.

The first heat insulation structure 600A includes a restriction member 610A having a substantially cylindrical shape, a plurality of heat insulation members 620A each having a cylindrical shape, and a plurality of slidable members 630A each having a cylindrical shape. The restriction member 610A is made of a resin material having high heat-insulating properties and has a cylindrical inner circumferential surface. An outer circumferential surface of the restriction member 610A fits the inner circumferential surface of the second annular member 720.

The heat insulation member 620A is made of a brittle material having high heat-insulating properties and pressure resistance (e.g. a ceramic such as zirconia). The heat insulation member 620A is made of a material having heat conductivity lower than at least the material of the main shaft portion 121 and the supporting member 122. The first heat insulation structure 600A includes three heat insulation members 620A. A first heat insulation structure in another embodiment may include at least two heat insulation members and the number thereof is not limited particularly. The slidable member 630A is made of a material having low emissivity and allowing the heat insulation member 620A to slide on it. Examples of such materials include a stainless steel and aluminum. The first heat insulation structure 600A includes two slidable members 630A. A first heat insulation structure in another embodiment may include at least one slidable member, and the number thereof is not limited particularly.

The heat insulation members 620A and the slidable members 630A are arranged alternately along the direction of compression by the main shaft portion 121 and the supporting member 122 (more specifically, the lower end of the main shaft portion 121 and the upper end of the supporting member 122). The heat insulation members 620A and the slidable members 630A are arranged inside the restriction member 610A. A small gap is left between the inner circumferential surface of the restriction member 610A and the outer circumferential surfaces of the heat insulation members 620A and between the inner circumferential surface of the restriction member 610A and the outer circumferential surfaces of the slidable members 630A. The heat insulation members 620A and the slidable members 630A are not adhered to anything.

Arranged as above, the heat insulation members 620A are constrained when the main shaft portion 121 and the supporting member 122 exert a compressive force on them but not constrained when a tensile force acts on them. The slidable members 630A are constrained when the main shaft portion 121 and the supporting member 122 exert a compressive force on them but not constrained when a tensile force acts on them. Each slidable member 630A is disposed between adjacent heat insulation members 620A and slidable on the heat insulation members 620A. The heat insulation members 620A and the slidable members 630A are allowed to be displaced in directions perpendicular to the direction of compression by the main shaft portion 121 and the supporting member 122. As described above, the restriction member 610A restricts the amount of movement of the heat insulation members 620A and the slidable members 630A in the aforementioned perpendicular directions.

The second heat insulation structure 600B also includes a restriction member 610B having a substantially cylindrical shape, a plurality of heat insulation members 620B each having a cylindrical shape, and a plurality of slidable members 630B each having a cylindrical shape. The restriction member 610B is made of a resin material having high heat-insulating properties and has a cylindrical inner circumferential surface. An outer circumferential surface of the restriction member 610B fits the inner circumferential surface of the first annular member 710.

The heat insulation member 620B is made of a brittle material having high heat-insulating properties and pressure resistance (e.g. a ceramic such as zirconia). The heat insulation member 620B is made of a material having heat conductivity lower than at least the material of the main shaft portion 121 and the supporting member 122. The second heat insulation structure 600B includes three heat insulation members 620B. A second heat insulation structure in another embodiment may include at least two heat insulation members and the number thereof is not limited particularly. The slidable member 630B is made of a material having low emissivity and allowing the heat insulation member 620B to slide on it. Examples of such materials include a stainless steel and aluminum. The second heat insulation structure 600B includes two slidable members 630B. A second heat insulation structure in another embodiment may include at least one slidable member and the number thereof is not limited particularly.

The heat insulation members 620B and the slidable members 630B are arranged alternately along the direction of compression by the main shaft portion 121 and the supporting member 122 (more specifically, the inward flange 712 of the first annular member 710 fixedly attached to the main shaft portion 121 and the outward flange 722 of the second annular member 720 fixedly attached the supporting member 122). The heat insulation members 620B and the slidable members 630B are arranged inside the restriction member 610B. A small gap is left between the inner circumferential surface of the restriction member 610B and the outer circumferential surfaces of the heat insulation members 620B and between the inner circumferential surface of the restriction member 610B and the outer circumferential surfaces of the slidable members 630B. The heat insulation members 620B and the slidable members 630B are not adhered to anything.

Arranged as above, the heat insulation members 620B are constrained when the main shaft portion 121 and the supporting member 122 exert a tensile force on them but not constrained when a compressive force acts on them. The slidable members 630B are constrained when the main shaft portion 121 and the supporting member 122 exert a tensile force on them but not constrained when a compressive force acts on them. Each slidable member 630B is disposed between adjacent heat insulation members 620B and slidable on the heat insulation members 620B. The heat insulation members 620B and the slidable members 630B are allowed to be displaced in directions perpendicular to the direction of compression by the main shaft portion 121 and the supporting member 122. As described above, the restriction member 610B restricts the amount of movement of the heat insulation members 620B and the slidable members 630B in the aforementioned perpendicular directions.

With the above structure, while a compressive force acts on the heat insulation members 620A, 620B, a tensile force does not act on them. When cryogenic liquid circulates in the interior of the main system unit 100, the temperature difference between the main shaft portion 121 and the supporting member 122 becomes large, and then the supporting member 122 contracts relatively to decrease in diameter. The first annular member 710 and the second annular member 720 also contract with their diameters decreasing from above to below. Accordingly, the restriction members 610A, 610B deform with their diameters decreasing from above to below. Moreover, the heat insulation members 620A, 620B contract with the amount of contraction increasing from above to below. Then, each heat insulation member 620A, 620B only slides between the slidable members 630A, 630B, thus the shearing stress acting on each heat insulation member 620A, 620B is small. When the shaft is moved to drive the pumps, the lower portions of the shaft may be at an angle with respect to the upper portions of the shaft due to vibrations produced by driving or other reasons. In such circumstances also, each heat insulation member 620A, 620B only slides between the slidable members 630A, 630B, thus the shearing stress acting on each heat insulation member 620A, 620B is small.

### <Advantages of the Heat Insulation Structure According to the Embodiment

In the heat insulation structure, the heat insulation members 520, 620A, 620B made of a material having heat conductivity lower than the two components for which heat insulation is to be provided are constrained when the two components exert a compressive force on them but not constrained when a tensile force acts on them. Therefore, a tensile force does not act on the heat insulation members 520, 620A, and 620B. Moreover, the heat insulation members 520, 620A, and 620B are allowed to be displaced in directions perpendicular to the direction of compression by the two components. Thus, if a force acts on the heat insulation members 520, 620A, and 620B in the perpendicular direction, they only slide on the slidable members 530, 630A, and 630B. Therefore, a shearing force scarcely acts on the heat insulation members 520, 620A, and 620B. This prevents breakage of the heat insulation members 520, 620A, and 620B. Therefore, the heat insulation structure can prevent the heat insulation members 520, 620A, and 620B from being broken while providing satisfactory heat insulation.

### Others

In the above-described heat insulation structure provided in the joint portion J1, when a compressive force acts between the pair of plate portions 131X, 131Y of the outer casing 131 and the outward flange 132e of the inner casing 132, a compressive force acts on the restriction member 510. Specifically, the flange 513 of the heat insulation structure 500A provided at the lower end (in the drawing) of the restriction member 510 is subject to a compressive force by the heat insulation member 520 and the outward flange 132e of the inner casing 132. The flange 513 of the heat insulation structure 500B provided at the lower end (in the drawing) of the restriction member 510 is subject to a compressive force by the heat insulation member 520 and the plate portion 131Y of the outer casing 131. The flange 513 provided on the restriction member 510 enables the members constituting the heat insulation structure (i.e. the restriction member 510, the heat insulation members 520, and the slidable members 530) to be handled as one integral component. Specifically, when the heat insulation members 520 and the slidable members 530 are alternately set on the restriction member 510, the heat insulation members 520 and the slidable members 530 are supported on the flange 513. Thus, the members constituting the heat insulation structure can be handled as one integral component.

Since the restriction member 510 is made of a resin material, it may plastically deform when a high compressive force acts on it. In the following, a structure that is designed to prevent a great compressive force from acting on the restriction member 510 will be described.

### First Modification

Fig. 4 is a schematic cross sectional view illustrating a first modification of the heat insulation structure in the joint portion of the outer casing and the inner casing of the embodiment. Fig. 4 also includes an enlarged view of the encircled portion. The structure is basically the same as the above-described structure illustrated in Fig. 2 and the same components are denoted by the same reference signs for the sake of convenience to eliminate the need for further description. Fig. 4 illustrates a heat insulation structure 500C provided between the plate portion 131X of the outer casing 131 and the outward flange 132e of the inner casing 132. A like heat insulation structure may also be employed between the outward flange 132e of the inner casing 132 and the plate portion 131Y of the outer casing 131.

The heat insulation structure 500C also includes a restriction member 510 having a substantially cylindrical shape, a plurality of heat insulation members 520 each having a cylindrical shape, and a plurality of slidable members 530 each having a cylindrical shape, as with the structure of the embodiment described above. Details of the restriction member 510 are the same as the above-described embodiment and will not be described further. The restriction member 510 is fixedly attached to the first plate portion 131X of the outer casing 131 by a bolt 540. As in the above-described embodiment, the lower end of the restriction member 510 only abuts the outward flange 132e of the inner casing 132 and is not fixed to it.

Details of the heat insulation member 520 and the slidable member 530 are also basically the same as those in the above-described embodiment. In this modification, however, the heat insulation member 520a that is in contact with the outward flange 132e of the inner casing 132 has an annular recess 521 provided on its inner circumference on the side in contact with the outward flange 132e. The annular recess 521 engages with a flange 513 or projecting portion provided on the restriction member 510. The inner casing 132 is the component to which the restriction member 520 is not fixed, among the outer and inner casings 131, 132.

The heat insulation structure 500C structured as above also provides advantageous effects the same as the heat insulation structures 500A, 500B of the embodiment described above. In the heat insulation structure 500C, the flange 513 of the restriction member 510 is situated in the annular recess 521. This can prevent a compressive force from acting on the outward flange 513 or reduce the compressive force. Therefore, the restriction member 510 can be prevented from plastically deforming or breaking. In this modification, the flange 513 provided on the restriction member 510 is configured to engage with the annular recess 521 provided on the heat insulation member 520a. Alternatively, for example, at least one projection may be provided on the restriction member 510 and at least one annular or not-annular recess may be provided on the heat insulation member 520a so that they can engage with each other.

### Second Modification

Fig. 5 is a schematic cross sectional view illustrating a second modification of the heat insulation structure in the joint portion of the outer casing and the inner casing of the embodiment. Fig. 5 also includes an enlarged view of the encircled portion. The structure is basically the same as the above-described structure illustrated in Fig. 2 and the same components are denoted by the same reference signs for the sake of convenience to eliminate the need for further description. Fig. 5 illustrates a heat insulation structure 500D provided between the plate portion 131X of the outer casing 131 and the outward flange 132e of the inner casing 132. A like heat insulation structure may also be employed between the outward flange 132e of the inner casing 132 and the plate portion 131Y of the outer casing 131.

The heat insulation structure 500D also includes a restriction member 510 having a substantially cylindrical shape, a plurality of heat insulation members 520 each having a cylindrical shape, and a plurality of slidable members 530 each having a cylindrical shape, as with the structure of the embodiment described above. Details of the restriction member 510 are the same as the above-descried embodiment and will not be described further. The restriction member 510 is fixedly attached to the first plate portion 131X of the outer casing 131 by a bolt 540. As in the above-described embodiment, the lower end of the restriction member 510 only abuts the outward flange 132e of the inner casing 132 and is not fixed to it.

Details of the heat insulation member 520 and the slidable member 530 are also basically the same as those in the above-described embodiment. What is different in this modification is that an annular elastic member 550 having strength higher than the restriction member 510 is provided between and in contact with the outward flange 132e of the inner casing 132 and the heat insulation member 520. The elastic member 550 is made of a metal such as a stainless steel. The inner casing 132 is the component to which the restriction member 520 is not fixed, among the outer and inner casings 131, 132.

The elastic member 550 has an annular recess 550a provided on its inner circumference on the side in contact with the outward flange 132e. The annular recess 550a engages with a flange 513 or projecting portion provided on the restriction member 510.

The heat insulation structure 500D structured as above also provides advantageous effects the same as the heat insulation structures 500A, 500B of the embodiment described above. In the heat insulation structure 500D, the flange 513 of the restriction member 510 is situated in the annular recess 550a. This can prevent a compressive force from acting on the flange 513 or reduce the compressive force. Therefore, the restriction member 510 can be prevented from plastically deforming or breaking. In this modification, the flange 513 provided on the restriction member 510 is configured to engage with the annular recess 550a provided on the elastic member 550. Alternatively, for example, at least one projection may be provided on the restriction member 510 and at least one annular or not-annular recess may be provided on the elastic member 550 so that they can engage with each other.

In the above-described embodiment and the first and second modifications, the restriction member 510 is fixed by the bolt 540. In this fixing structure, a locking washer or a locking set screw may be used to prevent loosening of the restriction member 510. The restriction member 510 may be fixed without using a securing member such as a bolt as with the restriction members 610A, 610B in the joint portion J2. For example, the restriction member 510 may be fixed by fitting into another member with a small clearance between them or pinned. A structure similar to the structures of the first and second modifications may be used in the joint portion J2 also. In that case, the projecting portion provided on the restriction member is configured to project radially inwardly. A recess with which the projecting portion engages is provided on the outer circumference of the heat insulation member or the elastic member.

### [Reference Signs List]

10: liquid supply system
100: main system unit
110: linear actuator
111: actuator supporter
120: shaft member
121: main shaft portion
122: cylindrical portion
122a: upper outward flange
122b: lower outward flange
123: connecting portion
130: container
131: outer casing
131a: opening
131b: inlet
131c: outlet
131X, 131Y: plate portion
132: inner casing
132a: body portion
132a1: first fluid passage
132a2: second fluid passage
132b1: first inward flange
132b2: second inward flange
132c: bottom plate
132c1: fluid passage
132d: fluid passage
132e: outward flange
141: first bellows
142: second bellows
151: third bellows
152: fourth bellows
160: check valve
160A: first check valve
160B: second check valve
160C: third check valve
160D: fourth check valve
200: vacuum container
201, 202: inward flange
310: inlet pipe
320: outlet pipe
500A, 500B, 500C, 500D: heat insulation structure
510, 610A, 610B: restriction member
511: outer circumferential surface
512: stepped surface
513: flange
520, 520a, 620A, 620B: heat insulation member
521: annular recess
530, 630A, 630B: slidable member
540: bolt
550: elastic member
550a: annular recess
600A: first heat insulation structure
600B: second heat insulation structure
710: first annular member
711: cylindrical portion
712: inward flange
720: second annular member
721: cylindrical portion
722: outward flange
J1, J2: joint portion
P1: first pump chamber
P2: second pump chamber

## Claims

1. A heat insulation structure provided in a joint portion between two components fixed to each other and subject to a compressive force, comprising;
heat insulation members disposed between the two components and made of a material having heat conductivity lower than the two component; and
a slidable member slidable on the heat insulation members,
wherein at least two of the heat insulation members are arranged along the direction of compression, and at least one of the slidable member is disposed between the heat insulation members which are adjacent to each other, the heat insulation members and the slidable member being allowed to be displaced in directions perpendicular to the direction of compression.

2. A heat insulation structure according to claim 1, further comprising a restriction member made of a resin that restricts the amount of movement of the heat insulation members and the slidable member in directions perpendicular to the direction of compression.

3. A heat insulation structure according to claim 2, wherein the restriction member is fixed on one of the two components, and the insulation member that is in contact with the other component among the two components on which the restriction member is not fixed has a recessed portion provided on its end on the side facing the other component on which the restriction member is not fixed, the recessed portion engaging with a projecting portion provided on the restriction member.

4. A heat insulation structure according to claim 2, wherein the restriction member is fixed on one of the two components, an elastic member having strength higher than the restriction member is disposed between the other component among the two components on which the restriction member is not fixed and the heat insulation member, and the elastic member has a recessed portion provided on its end on the side facing the other component on which the restriction member is not fixed, the recessed portion engaging with a projecting portion provided on the restriction member.

5. A heat insulation structure according to any one of claims 1 to 4, wherein a first component among the two components is disposed on both sides of a second component among the two components with respect to the direction of compression, and the heat insulation structure is provided between the first component and the second component on each side of the second component with respect to the direction of compression.

6. A liquid supply system comprising:
a container provided with a pump chamber inside it;
a shaft member that moves vertically upward and downward in the container; and
a bellows provided coaxially with the shaft member that expands and contracts with upward and downward motion of the shaft member,
wherein the shaft member includes a main shaft portion and a supporting member that supports the bellows, and a heat insulation structure according to any one of claims 1 to 4 is provided between the main shaft portion and the supporting member.
